# EUROPÄISCHE PATENTSCHRIFT

(11) **EP 0 999 891 B1**
(45) Veröffentlichungstag und Bekanntmachung des Hinweises auf die Patenterteilung: **03.04.2002**
(21) Anmeldenummer: 98939622.1
(22) Anmeldetag: 07.07.1998
(51) Int. Cl.: B01F 13/00, B65D 81/32, B65D 35/24

(54) **VORRICHTUNG ZUM LAGERN UND AUSPRESSEN VON FLIESSFÄHIGEN ZUSAMMENSETZUNGEN**
DEVICE FOR STORING AND SQUEEZING OUT FREE-FLOWING COMPOSITIONS
DISPOSITIF POUR STOCKER DES COMPOSITIONS ET LES EXPRIMER PAR COMPRESSION

(30) Priorität: 16.07.1997 DE 19730424
(43) Veröffentlichungstag der Anmeldung: 17.05.2000
(73) Patentinhaber: Henkel Teroson GmbH, 69123 Heidelberg (DE)
(72) Erfinder: BECK, Horst, D-67373 Dudenhofen (DE); SCHÄTZLE, Michael, D-69190 Walldorf (DE)
(74) Vertreter: Mathes, Nikolaus, Dr.
(86) Internationale Anmeldenummer: EP9804208
(87) Internationale Veröffentlichungsnummer: WO9903571

(56) Entgegenhaltungen:
- CH-A- 674 717
- DE-A- 2 726 911
- GB-A- 2 086 248
- US-A- 4 964 541

## Beschreibung

Die Erfindung betrifft eine Vorrichtung zum Lagern, Transportieren und Auspressen von fließfähigen Zusammensetzungen. insbesondere Kleb- und Dichtstoffen.

Immer wenn fließfähige Zusammensetzungen. ob dünnflüssig oder hochviskos, für eine gewisse Zeit gelagert oder transportiert werden sollen. müssen diese Stoffe vor dem Auslaufen. Austrocknen oder. sofern es sich um reaktive Stoffe wie z.B. Kleb- und Dichtstoffe handelt. vor dem Ausreagieren geschützt werden. Daher werden die die fließfähige Zusammensetzung enthaltenden Behälter verschlossen und erst unmittelbar vor der Anwendung geöffnet. Für das Öffnen ist meist ein eigener Arbeitsgang notwendig. Wenn der mit der reaktiven Substanz gefüllte Behälter Bestandteil eines komplexen Applikationsgerätes ist. ist dieser Öffnungsvorgang zum Beginn der Dosierung häufig ein aufwendiger Arbeitsgang und es kann sehr häufig zu Fehlanwendungen kommen.

Bei reaktiven Systemen wie z.B. Kleb- und/oder Dichtstoffen müssen häufig zwei oder mehr Komponenten zunächst getrennt gelagert werden, erst unmittelbar vor der Anwendung sollen hierbei die getrennten Komponenten miteinander in Kontakt treten und innig vermischt werden bevor sie appliziert werden und ausreagieren können. Für die großindustrielle Applikation derartiger zwei- oder mehrkomponentiger Kleb- und/oder Dichtstoffe oder Beschichtungsmaterialien ist dieses Problem dadurch gelöst worden, daß in der Regel recht aufwendige Dosierungs- und Mischeinrichtungen installiert worden sind. Mit Hilfe dieser Einrichtungen gelingt es daher meistens die zwei- oder mehrkornponentigen Systeme zuverlässig und sachgerecht getrennt zu lagern. zu dosieren und korrekt zu durchmischen.

Im Bereich der Kleinanwender. d.h. im kleinindustriellen Bereich mit geringen Stückzahlen oder insbesondere im handwerklichen Bereich oder beim Endverbraucher verbieten sich derartige aufwendige Misch- und Dosiereinrichtungen zur Applikation von zwei- und/oder mehrkomponentigen Systemen, da sie zu aufwendig und zu teuer sind. Von diesen Anwendern werden daher im allgemeinen einkomponentige Systeme bevorzugt, da diese mit einfachen Applikationsgeräten eingesetzt werden können, ohne daß bei deren Verwendung Misch- bzw. Dosierfehler auftreten, die die Endeigenschaften der Verklebung bzw. Abdichtung oder Beschichtung negativ beeinflussen können. In vielen Fällen reicht jedoch die Reaktionsgeschwindigkeit von einkomponentigen Systemen bis zur Erzielung der Endfestigkeit bzw. einer Mindestfestigkeit nicht aus, so daß in diesen Fällen nach wie vor konventionelle zweikomponentige Systeme eingesetzt werden. Da hier. wie oben ausgeführt, aufwendige Misch- und Dosiereinrichtungen nicht eingesetzt werden können, hat man andere Wege beschritten um die Auswirkungen eventueller Mischungsfehler zu reduzieren. In der Regel haben bei diesen konventionellen zwei- und mehrkomponentigen Systemen die beiden Komponenten vergleichbar große Volumina und Viskositäten. Dies bedeutet jedoch, daß für derartige Zweikomponentensysteme immer noch spezielle 2 K-Applikationssysteme erforderlich werden. Beispiele für derartige 2 K-Systeme sind coaxiale Kartuschen mit vorgesetztem Statikmischer. wie sie z.B. unter dem Namen "Supermix" der Firma Liquid Control angeboten werden. Desweiteren sind 2-K-Systeme mit zwei parallelen Kartuschen und einem dynamischen Mischkopf bekannt, wie sie z.B. in der EP-B-313519 oder der EP-B-351358 beschrieben sind. Die DE-A-4202591 beschreibt ein Verfahren zum Vormischen von wenigstens zwei pastösen Massen beim Einleiten in einen Mischer, bei dem die dem Mischer zugeführten Massenstränge dünne, aneinander angrenzende Schichten bilden. Die DE-C-2927584 beschreibt eine Vorrichtung zum Dosieren von Zweikomponenten-Produkten in einem vorbestimmten Mischungsverhältnis mit Hilfe einer Kolben-Zylinderanordnung, bei der zwei Zylinder axial hintereinander angeordnet sind. Mit Hilfe einer speziellen Anordnung können die beiden zwischen den beiden Kammern befindlichen Kolben gleichzeitig gegenläufig verschoben werden, wobei die Komponente aus der hinteren Kammer durch eine zentral durch die Kolben und die vordere Kammer führende Komponentenleitung an das Vorderende geführt wird, an dem eine Mischeinrichtung angebracht ist. Allen diesen 2 K-Systemen ist gemeinsam, daß für ihre Anwendung spezielle Vorrichtungen bzw. Applikationsgeräte erforderlich sind.

Für die Praxis ist es wünschenswert, derartige mehrkomponentige Zusammensetzungen mit Standardapplikationsgeräten verarbeiten zu können. Die WO 95/24556 beschreibt einen Dosieraufsatz für eine mittels einer Presse entleerbare Kartusche. Dieser Dosieraufsatz enthält eine Beimischkomponente sowie eine Dosierkammer mit einer Zahnradpumpe, die durch zwei Rotoren angetrieben wird. Die Hauptkomponente befindet sich in der Kartusche und treibt beim Auspressen über die Rotoren die Zahnradpumpe an, so daß sich mit diesem Dosieraufsatz mindestens zwei Komponenten mit Hilfe einer Standardkartuschenpresse dosiert zusammenmischen lassen. Nachteilig ist bei dieser Vorrichtung. daß der Dosieraufsatz mechanisch bewegte Teile enthält und außerdem die reaktiven Komponenten bereits in der Mischkammer mit der Zahnradpumpe zusammengeführt werden, so daß Reaktivsysteme bei Arbeitsunterbrechungen in der Dosierkammer bereits weiter reagieren. Dadurch kommt es bei anschließender Arbeitsfortführung infolge von Anhärtungen zu erheblichen Problemen.

Die US-A-4 964 541 beschreibt eine Vorrichtung zum Auspressen von fließfähigen Zusammen setzungen, mit einem beweglichen Kolben, der unter dem Druck einer ersten Substanz eine zweite Substanz durch eine zentrale Öffnung drückt.

Die WO 95/27558 beschreibt ein Verfahren und eine Vorrichtung zum Zusammenführen wenigstens zweier Fließmedien. wobei in einer bevorzugten Ausführung das erste (Haupt-)Medium sich in einer Standardkartusche befindet. Die das zweite Fließmedium enthaltende zweite Kammer ist in einer auf diese Kartusche aufsetzbaren Vorrichtung untergebracht. Diese Kammer ist mit dem Fließbereich und/oder mit der ersten Kammer über wenigstens ein Öffnungselement zur Abzweigung eines Teils des ersten Fließmediums aus der ersten Kammer in die zweite Kammer verbunden. Die Zweitkammer enthält ein bewegliches, das Erstmedium vom Zweitmedium trennendes Trennelement, das durch das in die Zweitkammer eintretende Erstmedium in Richtung gemeinsamer Öffnung vorgetrieben wird und dadurch das zweite Fließmedium aus der im Vorsatz befindlichen Kammer herauspreßt. Obwohl diese Vorrichtung in vielen Fällen brauchbare Ergebnisse liefert, hat sich in der Praxis gezeigt, daß insbesondere bei dünnflüssigen Zweitmedien erhebliche Dichtigkeitsprobleme an den Ein- bzw. Austrittsöffnungen auftreten können. Insbesondere bei der längeren Lagerung von reaktiven Systemen sowie bei kurzfristigen Arbeitsunterbrechungen während der Applikation sind dies gravierende Nachteile.

Es bestand daher die Aufgabe, eine Vorrichtung zum Auspressen von fließfähigen Zusammensetzungen zu entwickeln, die den Fluß mindestens einer Komponente erst durch den auf sie ausgeübten Auspressdruck freigibt. Insbesondere bestand die Aufgabe darin, eine Vorrichtung zum räumlich getrennten und synchronen Auspressen von zwei- oder mehreren fließfähigen Komponenten, insbesondere Kleb- und Dichtstoffe bereitzustellen. Vorzugsweise sollen diese Vorrichtungen mit herkömmlichen und im Markt weit verbreiteten Applikationsgeräten für einkomponentige Kleb-/Dichtstoffe Verwendung finden können.

Die erfindungsgemäße Lösung der Aufgabe ist den Patentansprüchen zu entnehmen. Sie beinhaltet im wesentlichen die Bereitstellung einer Vorrichtung zum Auspressen von fließfähigen Zusammensetzungen bestehend aus einem zylinderförmigen Behälter zur Aufnahme der fließfähigen Komponente, der durch zwei axial bewegliche Kolben verschließbar ist und der am unteren Ende der Zylinderwand eine Materialaustrittsöffnung aufweist, die den Fluß der fließfähigen Komponente erst freigibt, nachdem der untere, der Material Austrittsöffnung am nächsten angeordnete Kolben durch den Auspressdruck über die Materialaustrittsöffnung hinweg in die Endstellung bewegt wurde.

Eine bevorzugte Ausführungsform der Erfindung betrifft eine Vorrichtung zum räumlich getrennten und synchronen Auspressen von zwei oder mehr fließfähigen Komponenten, die wenigstens einen zylinderförmigen Behälter der vorgenannten Art aufweist.

Dabei ist während der Lagerung und des Transports mindestens eine der fließfähigen Komponenten in einem zylinderischen Körper mit zwei beweglichen Kolben eingeschlossen. Bei der Applikation wird Druck auf einen der beiden Kolben ausgeübt, so daß sich beide Kolben samt fließfähiger Komponente im zylindrischen Körper nach vorne in Richtung Austrittsöffnung bewegen. Nachdem der untere Kolben, der ursprünglich der Austrittsöffnung näher gelegen ist, diese Austrittsöffnung passiert hat und damit zum Austritt der fließfähigen Komponente freigegeben hat. wird dieser durch eine am zylindrischen Körper befindliche Halterung an seiner weiteren Bewegung gehindert, so daß bei weiterem Druck auf den oberen Kolben die fließfähige Komponente aus dem Behälter austreten kann. Die aus dem Behälter pro Zeiteinheit geförderte Menge der fließfähigen Komponente läßt sich durch den Durchmesser der Austrittsöffnung, durch den auf den oberen Kolben ausgeübten Auspressdruck sowie durch die Viskosität der fließfähigen Komponente in geeigneter Weise beeinflussen.

Dieses Prinzip läßt sich auf sehr viele Verpackungssysteme anwenden, eine besonders bevorzugte Anwendungsform sind Kartuschen für zwei- oder mehrkomponentige reaktive Systeme, wie z.B. Dicht- und/oder Klebstoffe bzw. Beschichtungsmaterialien. Der auslösende Druck zum Aktivieren/Öffnen des Behälters mit den zwei axial beweglichen Kolben kann über verschiedene Wege erreicht werden:
- auf mechanischem, direktem Wege, z.B. über den Vortriebstempel einer Kartuschenpistole oder einen anderen Antrieb.
- auf mechanischem, indirektem Wege, z.B. über eine Schraubenspindel. die ein Distanzstück nach vorne treibt.
- über eine selbst unter Druck stehende fließfähige Komponente, wenn sich der Behälter mit den zwei axial beweglichen Kolben innerhalb eines anderen äußeren Behälters befindet, der von der fließfähigen Komponente durchströmt wird. wobei hier der Druck auf den Kolben über eine vorgeschaltete Materialverteilung gesteuert werden kann.

Bevorzugte Beispiele für die fließfähigen Komponenten sind reaktive Kleb- und/oder Dichtstoffe bzw. Beschichtungsmaterialien als Basiskomponente. Die zweite und/oder weitere fließfähige Komponente kann dabei eine Katalysatorzusammensetzung, eine Farbkomponente oder ein Reaktiv-Vernetzer oder deren Kombination sein.

Eine besonders vorteilhafte Ausbildung der erfindungsgemäßen Vorrichtung besteht darin. daß mindestens ein zylinderförmiger Behälter mit den zwei axial beweglichen Kolben und der Materialaustrittsöffnung in Form eines Adapters ausgebildet ist, der auf eine handelsübliche Kartusche als zweiten Behälter aufgesetzt wird. Der zylinderförmige Behälter des Adapters kann dann mit einer untergeordneten Menge einer Katalysator- und/oder Vernetzer- und/oder Farbkomponente gefüllt werden und ist so aus ausgebildet, daß der Volumenstrom der aus der Kartusche herausgedrückten Basiskomponente des Kleb-/Dichtstoffes den diesem Materialstrom zugewandten beweglichen Kolben vorwärtstreibt und damit ein Auspressen der untergeordneten Menge der Katalysator- und/oder Vernetzer- und/oder Farbkomponente bewirkt. Dabei werden die beiden Komponenten kontinuierlich vermischt und diese Mischung gleichmäßig durch eine ggf. vor den Adapter vorgeschraubte Düse ausgetragen. Gegebenenfalls kann die Durchmischung der beiden Komponenten durch einen auf den Adapter aufgesetzten Statikmischer weiter vervollständigt werden. Für das erfindungsgemäße Verfahren kann grundsätzlich jede Form von zweikomponentigen Kleb- /Dichtstoffen oder Beschichtungsmaterialien verwendet werden, bei denen die beiden Komponenten erst vor der Applikation vermischt werden müssen. Eine besonders bevorzugte Ausführungsform besteht darin, daß als Hauptkomponente ein einkomponentig feuchtigkeitshärtendes System verwendet wird, dem eine zweite Komponente als Härter, Katalysator oder Farbkomponente oder ggf. deren Kombination zugesetzt wird, Dieses Basissystem kann z.B. auf der Basis von reaktiven Isocyanatgruppen enthaltenden Polyurethan Kleb-/Dichstoffen aufgebaut sein, der Basis-Kleb-/Dichtstoff kann jedoch auch auf der Basis von Polydimethylsiloxanen. Alkoxysilan-terminierten Prepolymeren oder auf der Basis von Polymeren mit reaktiven Epoxidgruppen aufgebaut sein. Besonders geeignete Polyurethan-Kleb-/Dichtstoffe sind z.B. im Beispiel 3 der WO 95/00572 beschrieben. Geeignete Kleb- /Dichtstoffe auf der Basis von Alkoxysilan-terminierten Polyethern sind in der DE-C-4119484 ausführlich beschrieben, wobei die dort beschriebenen Fluortenside nicht notwendigerweise Bestandteil der erfindungsgemäß einzusetzenden Kleb-/Dichtstoffe sein müssen. Geeigente Alkoxysilan-terminierte Polyurethane sind beispielsweise in der DE-A-36 29 237 beschrieben.

Die Katalysator-Komponente richtet sich nach dem eingesetzten Basis-Kleb-/Dichtstoff, für Polyurethane können die in der Polyurethanchemie bekannten metallorganischen Verbindungen wie z.B. Eisen- bzw. Zinnverbindungen eingesetzt werden, beispielhaft genannt sein hier 1,3-Dicarbonylverbindungen des Eisens oder des 2-bzw. 4-wertigen Zinns, insbesondere jedoch die Sn-(II)-Carboxylate bzw. die Dialkyl-Sn-(IV)Dicarboxylate oder die entsprechenden Dialkoxylate, wie z.B. Dibutylzinndilaurat, Dibutylzinndiacetat, Dibutylzinndibutylat, Dioctylzinndiacetat, Dibutylzinnmaleat, Zinn(II)-Octoat. Weiterhin können die hochwirksamen tertiären Amine oder Amidine als Katalysatoren verwendet werden. ggf. in Kombination mit den oben genannten Zinnverbindungen. Als Amine kommen dabei sowohl azyklische als auch insbesondere zyklische Verbindungen in Frage. Beispielhaft genannt seien Tetramethylbutandiamin, Bis(dimethylaminoethyl)ether, 1,4-Diaza-Bicyclooctan, 1,8-Diaza-Bicyclo(5.4.0)-undecen, 2-2'-Dimorpholinodiethylether oder Dimethylpiperazin oder auch Mischungen der vorgenannten Amine.

Wenn die Basis-Kleb-/Dichtstoff-Formulierung auf der Basis von Alkoxysilanterminierten Prepolymeren aufgebaut ist, können die oben genannten Zinnverbindungen eingesetzt werden, als Amin-Katalysator werden jedoch langkettige aliphatische Amine bevorzugt.

Als Vernetzer-Komponente eignen sich organische Di- oder Triamine wie z.B. Ethylendiamin, Propylendiamin. 1,4-Diaminobutan, Diethylentriamin oder Piperazin sowie ggf. auch niedermolekulare amino-terminierte Polyether vom Typ des "Jeffamins". Als Polyol-Vernetzer eignen sich grundsätzlich alle aus der Polyurethanchemie bekannten Polyole, insbesondere niedermolekulare Polyetherdiole bzw. -triole. Polyester-Polyole, Polyole auf der Basis von Epsilon-Caprolacton, auch "Polycaprolactone" genannt. Besonders bevorzugt sind jedoch Polyesterpolyole oleochemischer Herkunft. Derartige Polyesterpolyole können beispielsweise durch vollständige Ringöffnung von epoxidierten Triglyceriden eines wenigstens teilweise olefinisch ungesättigten Fettsäure- enthaltenden Fettgemisches mit einem oder mehreren Alkoholen mit 1 bis 12 C-Atomen und anschließender partieller Umesterung der Triglycerid-Derivate zu Alkylpolyesterpolyolen mit 1 bis 12 C-Atomen im Alkylrest hergestellt werden (siehe z.B. DE-A-3626223). Weitere geeignete Polyole sind Polycarbonatpolyole und Dimerdiole (Firma Henkel) sowie insbesondere Rizinusöl und dessen Derivate. Diese Vernetzungskomponente kann ggf. noch weitere niedermolekulare aktiven Wasserstoff enthaltende Verbindungen enthalten wie z.B. Ethylenglykol, Glycerin, Aminoalkohole oder Wasser.

Als Vernetzerkomponente für Alkoxysilan-terminierte Prepolymer-Systeme sowie für Kleb-/Dichtstoffe auf der Basis von Polydimethylsiloxanen können die in der Silanchemie bekannten niedermolekularen Silanvernetzer Verwendung finden.

Für Kleb-/Dichtstoffsysteme auf der Basis von Polymeren mit reaktiven Epoxidgruppen können die oben genannten Di- oder Polyamine eingesetzt werden.

Obwohl flüssige Vernetzer bzw. Katalysatoren direkt eingesetzt werden können, kann es zweckmäßig sein. diese mit inerten Lösungsmitteln und/oder Weichmachern zu versetzen und ggf. die Viskosität der Lösungen mit Verdickungsmitteln an die Viskosität des Basiskleb-/dichtstoffes anzugleichen. Beispielhaft erwähnt seien hier hochdisperse Kieselsäuren, Bentone, Cellulosederivate und ähnliche Rheologiehilfsmittel.

In einer weiteren Ausführungsform der Erfindung kann eine Farbkomponente über den Adapter zugemischt werden, dadurch vereinfacht sich beim Anwender die Lagerhaltung, da er nur einen einzigen Kleb-/Dichtstoff einer Grundfarbe (z.B. farblos oder weiß pigmentiert) bevorraten muß und die Farbkomponente seinen Bedürfnissen anpassen kann. im Fahrzeugbau kann es z.B. der für das Fahrzeug verwendete Lack sein.

Gegebenenfalls lassen sich auch Katalysator und/oder Vernetzer und Farbkomponente in einer einzigen Paste kombinieren.

Wie bereits oben erwähnt, wird in besonders bevorzugten Ausführungsformen die Katalysator-, Vernetzer-. und/oder Farbkomponente in Bezug auf die Basiskomponente in der Regel in untergeordneter Menge eingesetzt, so daß sich ein kleinvolumiger Adapter ergibt. Vorzugsweise wird diese Komponente in einer Menge von 0,5 bis 10 Gew.-%, bezogen auf die Basiskomponente, zugeführt. Es ist jedoch ohne weiteres möglich, beide Komponenten in gleichen Gewichts- und Volumenanteilen einzusetzen, wobei die Vorrichtung an das jeweilige Verhältnis der zusammenzuführenden Komponenten angepaßt sein sollte. Dies kann zweckmäßigerweise durch Anpassung der Behältervolumina. deren Füllungsgrad mit den Komponenten und/oder Anpassung des Querschnitts der Materialaustrittsöffnung(en) geschehen.

Anhand des nachfolgenden Beispiels soll die Erfindung näher erläutert werden.

### Beispiel:

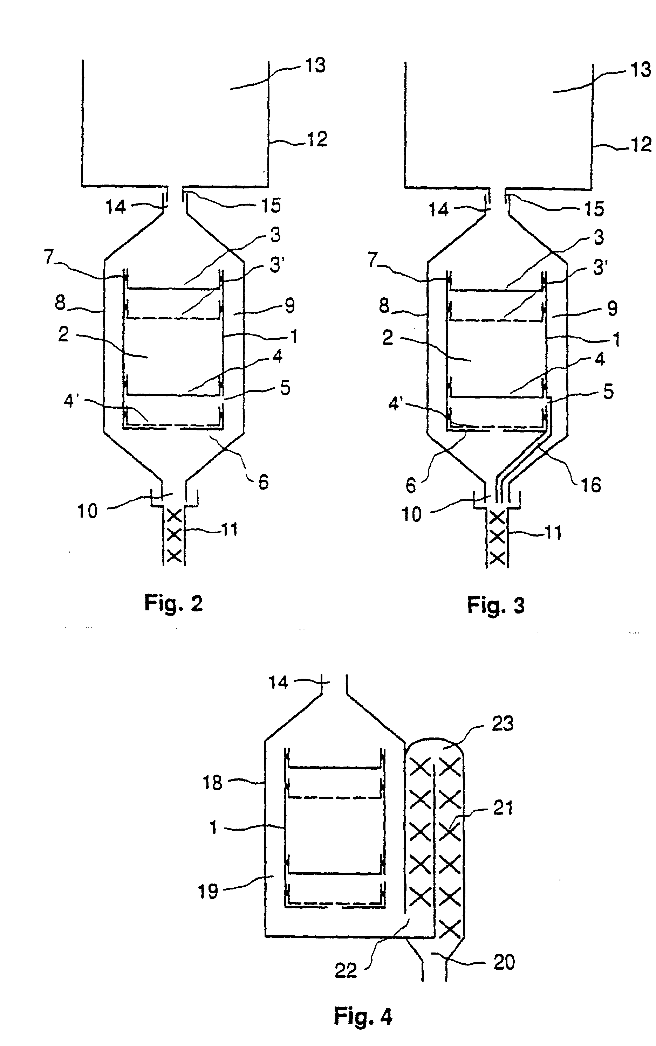

Auf die Kartusche eines handelüblichen einkomponentigen, feuchtigkeitshärtenden 1-K-Polyurethan-Kleb-/Dichtstoffes (Terostat 8590, Firma Henkel Teroson) wurde der erfindungsgemäße Adapter gemäß Figur 2 aufgeschraubt und in diesen Adapter wurden 5 ml einer wäßrigen mit PUR-Verdicker angedickten Lösung gegeben. Mit einer handelsüblichen Kartuschenpistole wurde die Kleb-/Dichtstoff-Vernetzer-Mischung aufgetragen und auf Aluminiumwinkel appliziert. Diese Aluminiumwinkel wurden vorher mit einem Polyurethanprimer (Terostat 8510 Firma Henkel Teroson) bestrichen und 15 Minuten abgelüftet. Die Aluminiumwinkel wurden zusammengefügt. so daß eine Klebefuge von 5 mm Dicke entstand. 60 Minuten nach dem Zusammenfügen wurde eine Zugfestigkeitsprüfung der Verklebung vorgenommen. Es ergab sich eine Zugfestigkeit von ca. 1.5 N/mm² im Mittel (Mittelwert aus 9 Versuchen). Die Shore-A Härte betrug nach dieser Zeit bereits 38. Im Endzustand wird eine Shore-A Härte von ca. 50 erreicht.

In einem Vergleichsversuch wurden der Kleb-/Dichtstoff ohne Verwendung von Vemetzer und Adapter in gleicher Weise auf die Aluminiumwinkel aufgetragen und auf seine Zugfestigkeit überprüft. Nach 60 Minuten ergab sich eine Zugfestigkeit von 0,15 N/mm ².

Im Vergleich zu dem in der WO 95/27558 offenbarten Adapter ergaben sich mit dem erfindungsgemäßen Adapter die folgenden Vorteile:
- Sowohl während der Lagerung des mit dem Vemetzer gefüllten Adapters als auch beim Austragen der Kleb-/Dichtstoff-Verneter-Mischung mit Hilfe der Kartuschenpistole traten bei dem erfindungsgemäßen Adapter keinerlei Dichtigkeitsprobleme auf. während bei dem Adapter gemäß WO 95/27558 sowohl bei der Lagerung als auch insbesondere bei der Applikation der Mischung der Vernetzer insbesondere auch dem rückwärtigen Teil der Adapterkammer austrat.
- Bei Arbeitsunterbrechungen kam es an der Austrittsstelle der Vernetzerflüssigkeit durch direkten Kontakt mit dem Kleb-/Dichtstoff zu Aushärtungen, die bei einer Fortsetzung der Applikation zu erheblichen Störungen führte, bei dem erfindungsgemäßen Adapter wurde diese Störung nicht beobachtet.

In der beigefügten Zeichnung sind einige bevorzugte Ausführungsformen der erfindungsgemäßen Vorrichtung dargestellt. Bei der nachfolgenden Beschreibung dieser Ausführungsbeispiele werden die bereits erwähnten. aber auch weitere Vorteile der vorliegenden Erfindung deutlich. In der Zeichnung sind alle Darstellungen geschnittene Seitenansichten. Es zeigen
- Figur 1: schematisch ein Ausführungsbeispiel der erfindungsgemäßen Vorrichtung gemäß Anspruch 1;
- Figur 2: ein Ausführungsbeispiel gemäß Anspruch 2 bzw. 3 mit einem in einen Adapter eingebauten Behälter gemäß Figur 1;
- Figur 3: ein weiteres Ausführungsbeispiel ähnlich dem in Figur 2, jedoch mit anderer Führung des Materialstroms der zweiten Komponente;
- Figur 4: ein weiteres Ausführungsbeispiel ähnlich dem in Figur 2, jedoch mit anderer Führung des Materialstroms und anderer Anordnung des Statikmischers;
- Figur 5: eine Ausführungsform mit 2 nebeneinander liegenden Behältern und annähernd gleichen Füllvolumen

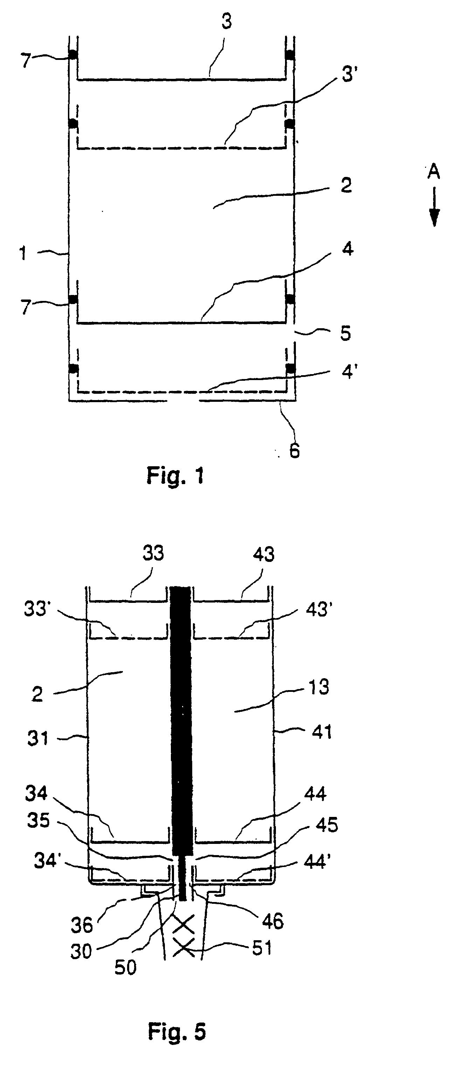

**Figur 1** zeigt ein Ausführungsbeispiel einer erfindungsgemäßen Vorrichtung zum Auspressen von fließfähigen Zusammensetzungen. insbesondere Kleb- und Dichtstoffen. Dabei dient der zylinderförmige Behälter 1 zur Aufnahme der fließfähigen Komponente 2. Der zylinderförmige Behälter 1 ist dabei durch 2 axial bewegliche Kolben 3 und 4 verschlossen. Diese Kolben sind so ausgeführt, daß sie einerseits dicht an der Zylinderwandung anschließen und somit einen Austritt von niederviskosen fließfähigen Komponenten 2 verhindern, andererseits sind sie leicht genug in axiale Richtung beweglich, so daß nur ein geringer Druck notwendig ist. um die Kolben 3 und 4 zu verschieben. Gegebenenfalls kann sich zwischen Kolben und Zylinderwand eine Dichtungsvorrichtung 7 befinden. diese kann in Form eines O-Ringes ausgeführt sein, sie kann jedoch auch eine an den Kolben angegossene Dichtlippe sein.

Zur Entnahme der fließfähigen Komponente 2 wird auf den Kolben 3 ein Druck in Richtung des Pfeiles A ausgeübt. Dadurch bewegt sich der Kolben 3 zunächst in die mit 3' bezeichnete Stellung und transportiert über den auf die fließfähige Komponente ausgeübte Druck in Kolben 4 in die Stellung 4'. Durch die Arretierung bzw. Halterung 6 wird der Kolben 4 in der Stellung 4' gehalten und kann nicht weiter bewegt werden. In dieser Stellung ist die Materialaustrittsöffnung 5 freigelegt, so daß bei weiterem Druck auf den Kolben 3 die fließfähige Komponente 2 durch diese Materialaustrittsöffnung austreten kann. Dieses Auspressen der fließfähigen Zusammensetzung 2 aus dem zylinderförmigen Behälter erfolgt durch weiteren Druck in Richtung A, wobei sich der Kolben 3 weiter in Richtung Materialaustrittsöffnung bewegt. Gegebenfalls kann sich an der Materialaustrittsöffnung eine Düse, ein den Materialstrom umlenkender Fließkanal z.B. in Form einer üblichen Kartuschenspitze befinden. Diese speziellen Ausführungsformen sind nicht in der Figur 1 gezeigt.

Die **Figur 2** zeigt eine Vorrichtung zum räumlich getrennten und synchronen Auspressen von zwei fließfähigen Komponenten 2 und 13, wobei sich ein zylinderförmiger Behälter 1 gemäß Figur 1 innerhalb eines weiteren zylinderförmigen Behälters 8 (Adapter) befindet. Dieser Behälter 8 ist über seine Materialeintrittsöffnung 14 mit der Materialaustrittsöffnung 15 des Behälters 12 verbunden. In der Figur 2 ist nur der untere Teil des Behälters 12 in sehr schematischer Form dargestellt. Hierbei handelt es sich in der Regel um eine handelsübliche Kartusche für Kleb- und/oder Dichtstoffe. In aller Regel haben derartige Kartuschen an der Entnahmeöffnung 15 ein Außengewinde. so daß bei entsprechender Ausformung eines Innengewindes an der Materialeintrittsöffnung 14 des Adapters 8 dieser einfach durch Aufschrauben auf die Kartusche 12 mit dieser starr verbunden werden kann. Es sind jedoch auch andere Verbindungsmechanismen der beiden Behälter 8 und 12 denkbar. beispielhaft erwähnt seien Bajonettverschlüsse, Planflansche mit Überwurfmuttern, Steckverbindungen mit mechanischen Arretierungen und dergleichen.

Der Behälter 1 ist in der Adapterkammer 8 so angeordnet, daß durch den konzentrischen Zwischenraum 9 die zweite fließfähige Komponente 13 aus dem Vorwärtsbehälter 12 in den Behälter 8 gedrückt werden kann und über den Zwischenraum in Richtung Austrittsöffnung 10 des Adapters 8 transportiert wird. Dabei übt bei der Entnahme der Auspressdruck der zweiten fließfähigen Komponente 13 einen Druck auf den Kolben 3 aus, so daß sich die Kolben 3 und 4 in die Stellungen 3' und 4' in der oben bereits geschilderten Weise bewegen. Besonders bevorzugt ist auf dem inneren Behälter ein Verteilerkopf aufgesetzt, der beim Aufschrauben des Behälters 8 auf die Kartusche 12 bereits den Vorschub der beiden Kolben 3 und 4 in die Endstellung 3' bzw. 4' bewirkt. Desweiteren kann der Verteiler so beschaffen werden, daß eine geeignete Druckdifferenz zwischen den Materialien im Behälter 8 und dem Zwischenraum 9 aufgebaut werden kann. Dieser Verteilerkopf ist in der Figur 2 nicht gezeigt. Durch das Freilegen der Austrittsöffnung 5 tritt die Komponente 2 an der Materialaustrittsöffnung 5 mit der im Zwischenraum 9 befindlichen Komponente 13 in Kontakt und wird gemeinsam über die Austrittsöffnung 10 und einen ggf. daran angebrachten Statikmischer 11 ausgetragen. Hierbei kann ein Statikmischer 11 (nur teilweise dargestellt) für eine vollständige Durchmischung der beiden fließfähigen Komponenten sorgen, sofern dies erforderlich ist.

Die **Figur 3** zeigt eine weitere erfindungsgemäße Ausführungsforrn der Vorrichtung. Diese unterscheidet sich von der Ausführungsform gemäß Figur 2 dadurch, daß die Materialaustrittsöffnung 5 in einen rohrförmigen Kanal 16 mündet, der dafür Sorge trägt, daß die Komponente 2 erst an der Materialaustrittsöffnung 10 mit der Komponente 13 in Kontakt gerät. Dies kann bei hochreaktiven Systemen von Vorteil sein, insbesondere wenn diese zweikomponentigen Materialien mit häufigen Arbeitsunterbrechungen appliziert werden müssen, da hier eine Materialanhärtung an dem Zusammenführungspunkt der Komponenten praktisch ausgeschlossen ist. Eine ggf. im Statikmischer 11 begonnene An- bzw. Durchhärtung des Materials kann leicht dadurch überwunden werden. daß der Statikmischer 11 entfernt und gereinigt bzw. durch einen neuen Wegwerfstatikmischer ersetzt wird.

Die **Figur 4** zeigt eine weitere Ausführungsform eines Behälters 18, der einen bereits oben geschilderten Behälter 1 mit den axial beweglichen Kolben enthält und ebenfalls über die Materialeintrittsöffnung 14 mit einem weiteren Behälter in der in Figur 2 bzw. 3 genannten Art verbunden werden kann (hier nicht gezeigt). Der konzentrische Zwischenraum 19 entspricht dem konzentrischen Zwischenraum 9 gemäß Figur 2 bzw. 3 und dient zum Transport der fließfähigen Komponente. Wesentlicher Unterschied zur Ausführungsform gemäß Figur 2 bzw. 3 ist die seitliche Anordnung des Statikmischers 21, der an der Stelle 23 in seiner Förderrichtung umgelenkt wird. Die gemeinsamen Komponentenströme 2 und 13 treten an der Stelle 22 in den Statikmischer ein und werden hier homogen durchmischt. An das Austrittsende 20 des Statikmischers kann sich ggf. eine Applikationsdüse zur Formgebung der Komponente anschließen. Das Wirkprinzip der Zusammenführung der beiden Komponenten erfolgt bei der Vorrichtung gemäß Figur 4 in völlig analoger Weise zu der Vorrichtung gemäß Figur 2. Gegebenenfalls kann auch bei der Ausführungsform gemäß Figur 4 die Komponente 2 durch einen rohrförmigen Kanal so umgelenkt werden, daß erst im Eintrittsbereich 22 ein Kontakt der beiden fließfähigen Komponenten erfolgt (in Figur 4 nicht dargestellt).

Die **Figur 5** zeigt eine weitere erfindungsgemäße Ausführungsform der Vorrichtung. Hier sind zwei Behälter 31 und 41 nebeneinander angeordnet, die beide jeweils 2 axial bewegliche Kolben 33, 43 und 34, 44 enthalten, die in völlig analoger Weise zu dem oben dargestellten Prinzip nach Ausübung von Auspressdruck auf die Kolben 33 bzw. 43 in die Stellungen 33'. 43' bzw. 34' und 44' bewegt werden. Dabei werden gleichzeitig die beiden Materialaustrittsöffnungen 35 und 45 freigegeben. Durch die Trennwand 30 wird bewirkt. daß 2 Kanäle 36 und 46 entstehen, so daß die beiden Komponenten 2 und 13 erst an der gemeinsamen Materialaustrittsöffnung 50 miteinander in Kontakt treten. Hier können die beiden Materialien entweder als nebeneinanderliegende Stränge coextrudiert werden oder ggf. durch einen Statikmischer 51 geführt werden, der für eine Durchmischung der Komponenten sorgt.

Denkbar sind auch Ausführungen der Vorrichtung gemäß der in Figur 5 dargestellten Art, bei denen die Volumina für die Komponenten 2 und 13 unterschiedlich sind. Dies kann entweder durch unterschiedliche Querschnitte der die Materialien 2 und 13 aufnehmenden Kammern bewerkstelligt werden, in diesem Fall würden die Förderwege 33 und 43 der beiden Kolben gleich lang sein. Bei gleichem Querschnitt der beiden Kammern 31 und 41 und unterschiedlichen Volumina können die dann notwendigen unterschiedlichen Förderwege für die Kolben 33 und 43 entweder durch unterschiedliche Dimensionierungen der Materialaustrittsöffnungen 35 und 45 bzw. der Kanäle 36 und 46 bewerkstelligt werden. Es ist jedoch auch möglich, den Vortriebsmechanismus für die Kolben 33 und 43 so zu gestalten, daß entsprechend angepaßte unterschiedliche Vortriebswege sichergestellt sind.

## Patentansprüche

1. Vorrichtung zum Auspressen von fließfähigen Zusammensetzungen, insbesondere Kleb- und Dichtstoffen, die
• einen zylinderförmigen Behälter (1) zur Aufnahme der fließfähigen Komponente (2) aufweist,
• der durch zwei axial bewegliche Kolben (3) und (4) verschließbar ist und
• der am unteren Ende der Zylinderwand eine Materialaustrittsöffnung (5) aufweist,
• die den Fluß der Komponente (2) erst freigibt, nachdem der der Material austriffsöffnung (5) am nächsten angeordnete Kolben (4) durch den Auspressdruck über die Materialaustrittsöffnung hinweg in seine Endstellung (4') bewegt wurde.

2. Vorrichtung zum räumlich getrennten und synchronen Auspressen von zwei oder mehr fließfähigen Komponenten, insbesondere Kleb- und Dichtstoffen, **dadurch gekennzeichnet, daß** sie
• wenigstens einen zylinderförmigen Behälter gemäß Anspruch 1 aufweist.

3. Vorrichtung gemäß Anspruch 2, **dadurch gekennzeichnet, daß** sich der Behälter (1) innerhalb eines Behälters (8) befindet, wobei die zweite fließfähige Komponente (13) aus einem Vorratsbehälter (12) in den Behälter (8) gedrückt wird,
• durch einen konzentrischen Zwischenraum (9) zu einer Öffnung (10) gefördert wird und
• gleichzeitig die axiale Verschiebung der Kolben (3) und (4) bewirkt
• wodurch die fließfähige Komponente (2) durch die Materialaustrittsöffnung (5) austritt und
• im Zwischenraum (9) mit der zweiten Komponente (13) in Kontakt kommt,
• wobei eine weitgehende Durchmischung der Komponenten (2) und (13) in einem ggf. auf die Öffnung (10) aufgesetzten Statikmischer (II) erfolgt.

4. Vorrichtung gemäß Anspruch 2, **dadurch gekennzeichnet, daß** sich der Behälter (1) in einem Behälter (18) befindet, der mit einem seitlich angebrachten Statikmischer (21) eine bauliche Einheit bildet.

5. Vorrichtung gemäß Anspruch 2, **dadurch gekennzeichnet, daß** zwei zylinderförmige Behälter (31) und (41), die die fließfähigen Komponenten (2) und (13) enthalten, nebeneinander angeordnet sind und im unteren Bereich einander gegenüberliegende Materialaustrittsöffnungen (35) und (45) aufweisen, die in Kanäle (36) und (46) münden, wobei letztere durch eine Wandung (30) getrennt sind, so daß die Komponenten (2) und (13) erst im gemeinsamen Öffnungsbereich (50) bzw. in der aufgesetzten Mischeinrichtung (51) miteinander in Kontakt kommen.

## Claims

1. A device for expressing free-flowing compositions, more particularly adhesives and sealants, comprising
• a cylindrical container (1) for accommodating the free-flowing component(2)
• which is designed to be closed by two axially displaceable pistons (3) and (4) and
• which, at the lower end of the cylinder wall, comprises a material outlet opening (5)
• which only releases the flow of the component (2) after the piston (4), which is positioned closest to the material outlet opening (5), has been moved past the material outlet opening into its end position (4') by the expressing pressure.

2. A device for the spatially separate and synchronous expression of two or more free-flowing components, more particularly adhesives and sealants, **characterized in that** it comprises
• at least one cylindrical container according to claim 1.

3. A device as claimed in claim 2, **characterized in that** the container (1) is disposed in a container (8), the second free-flowing component (13) being pressed from a storage container (12) into the container (8),
• delivered through a concentric interstice (9) to an opening (10) and
• at the same time axially displacing the pistons (3) and (4)
• so that the free-flowing component (2) flows out through the material outlet opening (5) and
• comes into contact with the second component (13) in the interstice (9),
• the components (2) and (13) being extensively intermixed in a static mixer (11) fitted onto the opening (10).

4. A device as claimed in claim 2, **characterized in that** the container (1) is disposed in a container (18) which forms a unit with a laterally arranged static mixer (21).

5. A device as claimed in claim 2, **characterized in that** the two cylindrical containers (31) and (41) accommodating the free-flowing components (2) and (13) are arranged beside one another and, at the lower ends, have material outlet openings (35) and (45) which face one another and which open into the passages (36) and (46), the latter being separated by a wall (30) so that the components (2) and (13) only come into contact with one another in the common opening region (50) or in the fitted mixer (51).

## Revendications

1. Dispositif pour exprimer par compression des compositions coulantes, en particulier des adhésifs et produits d'étanchéité, qui
présente un récipient cylindrique (1) pour accueillir le composant coulant (2)
qui peut être fermé par deux pistons mobiles axialement (3) et (4) et
qui présente à l'extrémité inférieure de la paroi de cylindre une ouverture de sortie de matière (5)
qui libère seulement l'écoulement du composant (2) après que le piston (4) le plus proche de l'ouverture de sortie de matière (5) a été déplacé par la pression d'éjection dans sa position finale (4') au-delà de l'ouverture de sortie de matière.

2. Dispositif pour exprimer de manière séparée dans l'espace et synchrone deux composants coulants ou plus, en particulier des adhésifs et produits d'étanchéité, **caractérisé en ce qu'**il
présente au moins un récipient cylindrique suivant la revendication 1.

3. Dispositif suivant la revendication 2, **caractérisé en ce que** le récipient (1) se trouve à l'intérieur d'un récipient (8), le deuxième composant coulant (13) étant pressé depuis un réservoir de stockage (12) dans le récipient (8),
est transporté à travers un espace intermédiaire concentrique (9) vers une ouverture (10) et
provoque en même temps, le déplacement axial des pistons (3) et (4),
suite à quoi le composant coulant (2) sort à travers l'ouverture de sortie de matière (5) et
entre en contact avec le deuxième composant (13) dans l'espace intermédiaire (9),
provoquant un mélange intime des composants (2) et (13) dans un mélangeur statique (11) monté le cas échéant sur l'ouverture (10).

4. Dispositif selon la revendication 2, **caractérisé en ce que** le récipient (1) se trouve dans un récipient (18) qui forme une unité constructive avec un mélangeur statique (21) monté latéralement.

5. Dispositif selon la revendication 2, **caractérisé en ce que** deux récipients cylindriques (31). et (41), qui contiennent les composants coulants (2) et (13), sont disposés l'un à côté de l'autre et présentent dans la partie inférieure des ouvertures de sortie de matière (35) et (45) qui débouchent sur des canaux (36) et (46), ces derniers étant séparés par une paroi (30), de sorte que les composants (2) et (13) entrent seulement en contact dans la zone d'ouverture commune (50) ou dans le dispositif de mélange (51) appliqué.
